# EUROPÄISCHE PATENTANMELDUNG

(11) **EP 3 017 784 A1**
(43) Veröffentlichungstag der Anmeldung: **11.05.2016**
(21) Anmeldenummer: 14192172.6
(22) Anmeldetag: 06.11.2014
(51) Int. Cl.: A61C 7/36

(54) **SCHRAUBENLOSES HERBST-SCHARNIER**

(71) Anmelder: Baudisch, Werner, 4840 Vöcklabruck (AT)
(72) Erfinder: Baudisch, Werner, 4840 Vöcklabruck (AT)

(57) **Zusammenfassung**

Das Herbst-Scharnier ist ein bekanntes und erprobtes kieferorthopädisches Gerät, welches zur Korrektur einer Rücklage des Unterkiefers eingesetzt wird. Beim erfindungsgemäßen schraubenlosen Herbst-Scharnier werden die aktiven Teleskopelemente anstelle von Schrauben mittels einer mechanischen Steckverbindung mit dem Grundkörper verbunden. Durch den Verzicht auf die Schrauben wird der Tragekomfort des Patienten erhöht.

## Beschreibung

### 1. Einleitung:

Das Herbstscharnier ist ein bekanntes und erprobtes kieferorthopädisches Gerät, welches zur Korrektur einer Rücklage des Unterkiefers eingesetzt wird.

Die traditionelle Herbst Apparatur besteht aus folgenden Teilen:

### • Grundgerüst:

Dieses Gerüst, meist hergestellt aus Metallguss (CoCr- Legierung) wird vom Zahntechniker passgenau angefertigt und auf die Seitzähne in beiden Kiefern geklebt.

Zusätzlich sind am Gerüst außen (bukkal) Bolzen mit einem Innengewinde angebracht. Diese befinden sich im Oberkiefer im Bereich der Molaren, im Unterkiefer im Bereich der Eckzähne. Mithilfe dieser Bolzen und entsprechender Schrauben werden die aktiven Elemente (s.u.) am Grundgerüst fixiert.

### • Aktive Elemente:

Die aktiven Elemente bewirken die eigentliche Vorverlagerung des Unterkiefers. Dazu wird das Oberkieferrohr beim traditionellen Herbstscharnier mit einer Schraubverbindung am Bolzen des Oberkiefers fixiert.

### Funktionsprinzip des Herbst Scharnieres

Die Rohre werden beim Öffnen des Mundes teleskopartig auseinandergezogen. Beim Schliessen des Mundes verweilt der Unterkiefer jedoch in der korrekten wünschenswerten neu geschaffenen Unterkieferposition. Dadurch werden Kau- und Kiefermuskelgruppen gedehnt und vorgespannt, die vorher in der Rücklage des Unterkiefers entspannt waren.

Diese Kraft überträgt sich nun durch die Teleskope vom Unterkiefer auf den Oberkiefer und bewirkt eine Rückverlagerung der Oberkiefer- und Vorverlagerung der Unterkieferzähne.

Ohne Teleskope würde der Unterkiefer in die ursprüngliche Rücklage zurückfallen.

Die Behandlung dauert ca. sechs bis acht Monate.

Als Alternative bieten sich neben zahlreichen anderen Möglichkeiten bei leichteren Fehlstellungen Gummizüge an, bei hochgradigen Fehlstellungen ist mitunter eine Kieferoperation notwendig. Erfunden wurde das Gerät 1909 von dem Zahnmediziner Emil Herbst.

### 2. Problematik beim bestehendem Herbst Scharnier:

Die Aufbauhöhe des Bolzens, die sich aus der Höhe des Bolzens und der verwendeten Schraubenhöhe zusammensetzt, kann zu Problemen führen.

Erstens wird die bukkale (wangenseitige) Schleimhaut oft irritiert und kann aufgrund von Verletzungen und damit verbundenen Schleimhautentzündungen zu vorzeitigen Behandlungsabbrüchen führen.

Zweitens ist der Bolzen im Unterkiefer von außen durch eine sichtbare Vorwölbung im Bereich unterhalb der Mundwinkeln erkennbar. Dies wird vom Patienten als kosmetisch störend empfunden.

Die Verwendung von Schrauben kann zu Verlusten der aktiven Elemente führen, da sich bei der Öffnungs- und Schließbewegung durch begleitende Friktion (Reibung) die Schrauben lockern und verloren gehen können.

Da die Schrauben aufgrund ihrer kleinen Dimension nicht mit handelsüblichen Imbusschlüsseln gedreht werden können, ist der Patient bei Komplikationen stets auf die Hilfe eines im Bereich Herbstscharnier kompetenten Kieferorthopäden angewiesen.

Das Einbringen der Oberkieferschrauben beim Fixieren des Oberkieferteiles ist sehr schwierig. Bedingt durch die weit hinten in der Mundhöhle befindliche Lage des Molaren (Backenzahnes) kann der Imbusschlüssel nicht, oder nur sehr schwierig achsengerecht in die Schraube inseriert werden. Klinisch weisen diese Patienten infolge des Eindrehens dieser Schrauben mit dem entsprechenden Schraubenschlüssel oft Druckstellen und Rötungen im Bereich der Mundwinkeln auf.

Schließlich ist das Herbstscharnier durch seine glatte Metalloberfläche auch eine Basis für mikrobielle Plaque die durch den Patienten bei der Mundhygiene entfernt werden muss, was aufgrund der Größe des Scharniers nicht immer leicht ist.

### 3. Das schraubenlose Herbst Scharnier

### Modifikation nach DDr. Werner Baudisch

Das Funktionsprinzip unter Verwendung der beschriebenen Teleskope ist das Gleiche wie beim traditionellen Herbstscharnier. Der wesentliche Unterschied besteht in der Verwendung einer neuen schraubenlosen Befestigung am Grundgerüst des Ober- und Unterkiefers.

### Befestigung am Oberkiefer

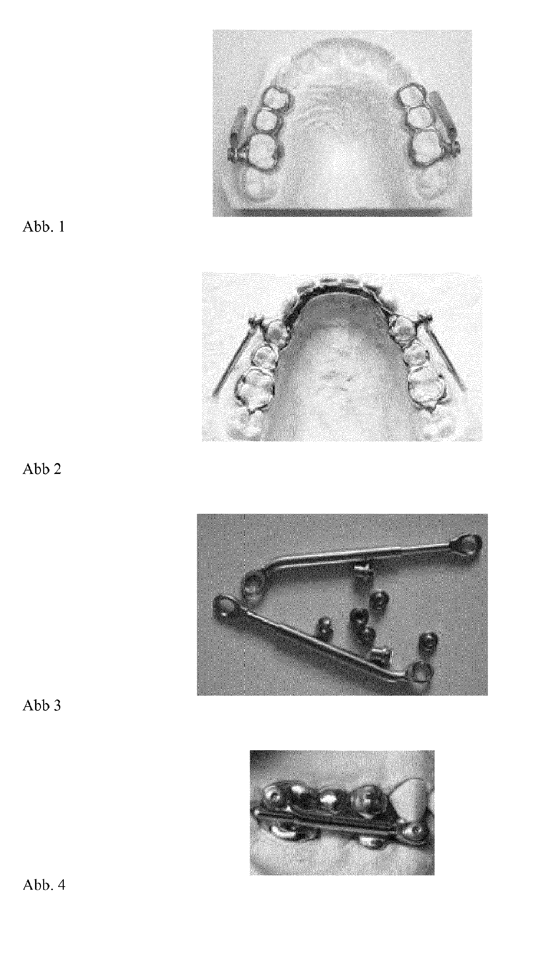

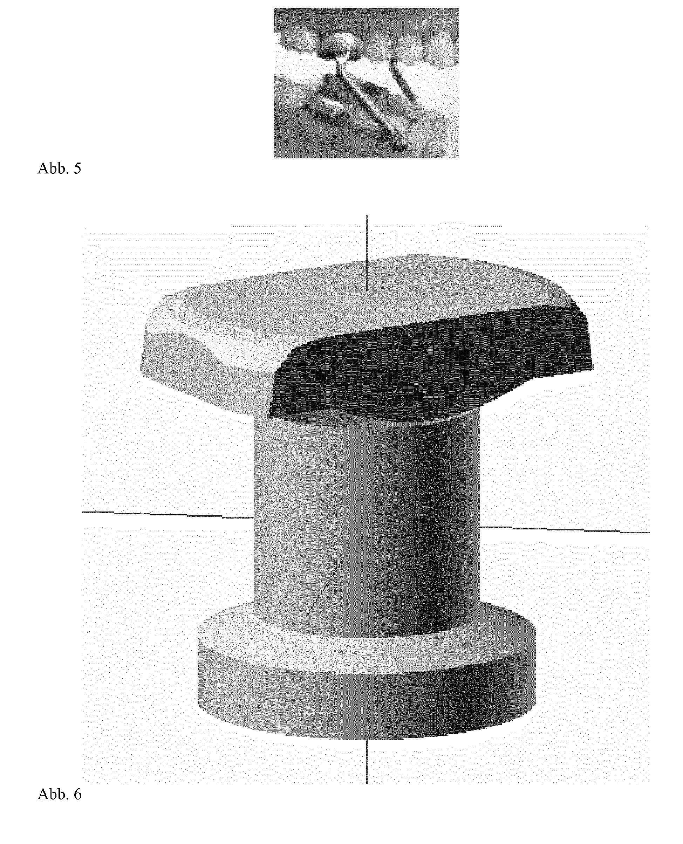

Die schraubenlose Befestigung des Oberkieferteleskopes basiert auf der Verwendung eines mechanischen Drehverschlusses. Voraussetzung dafür ist die Verwendung eines speziellen Bolzens (Abb 6). Dieser wird am Metallgerüst im Bereich des ersten großen Backenzahnes bukkal (wangenseitig) befestigt.

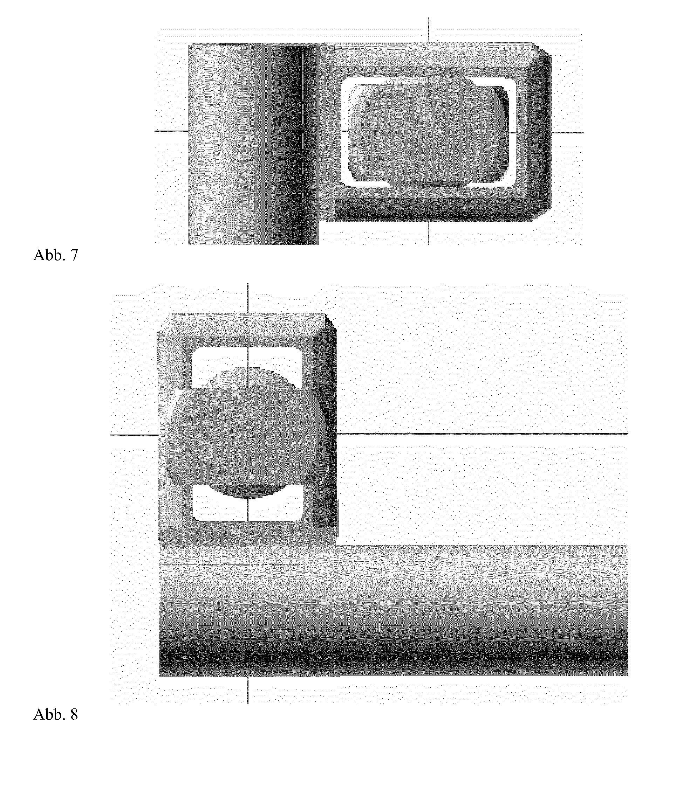

Das Einbringen des Oberkieferattachments (Rohr) erfolgt durch Verdrehung des Oberkieferrohres um 90° (Abb. 7).

Es wird über den Bolzen gesetzt, in die Neutralposition gedreht und ist verriegelt (Abb. 8).

### Befestigung am Unterkiefer

### Im Unterkiefer ist die Verwendung des gleichen Verriegelungssystems wie im Oberkiefer möglich. Aus Gründen der Schleimhautverträglichkeit empfiehlt es sich aber ein anderes Verschlussprinzip zu verwenden. Dies wird nun vorgestellt.

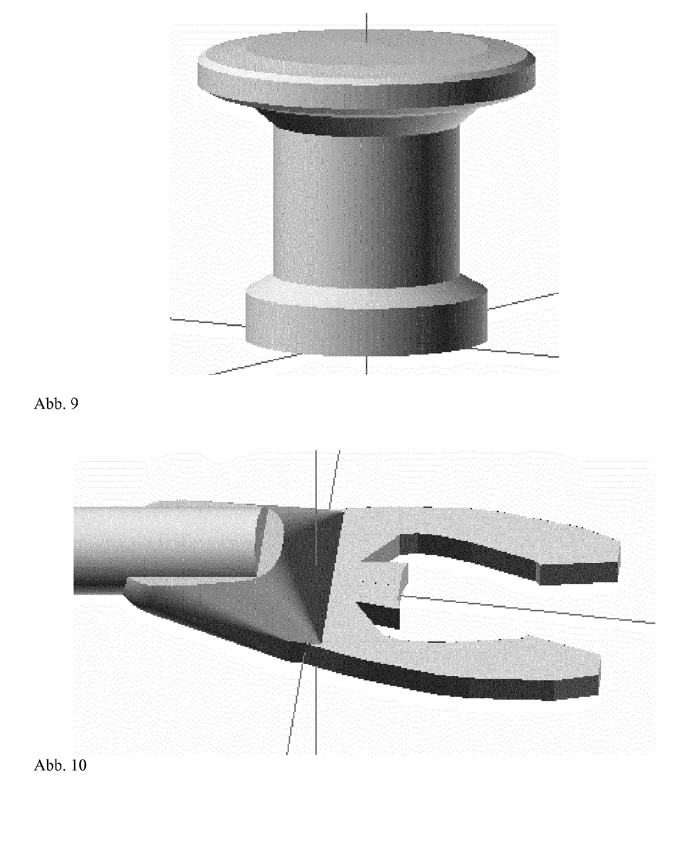

Um die Bauhöhe und damit Schleimhautirritationen zu verringern, verwenden wir im Gegensatz zum Oberkiefer am Grundgerüst einen niedrigeren, abgerundeten und runden Bolzen (Abb. 9).

Die Teleskopstangen haben als Befestigungselement für die Unterkieferbolzen ein gabelförmiges Attachment (Abb. 10).

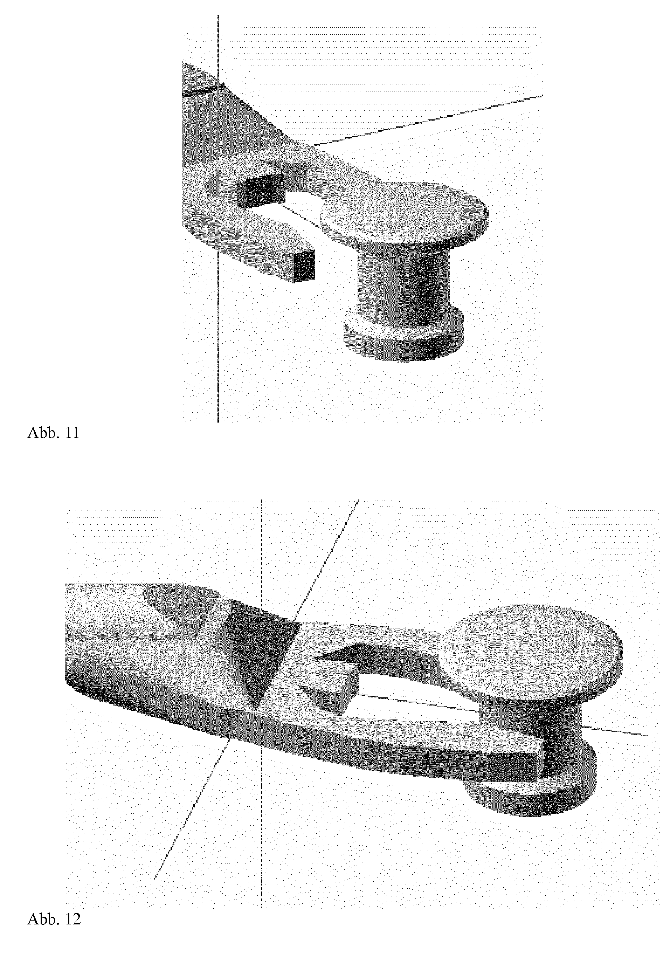

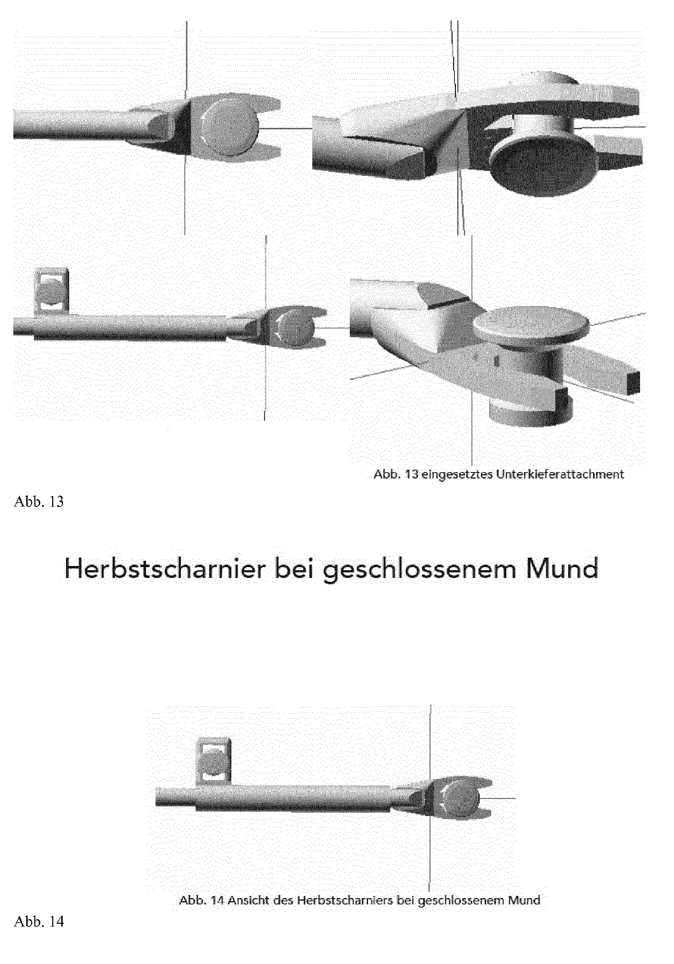

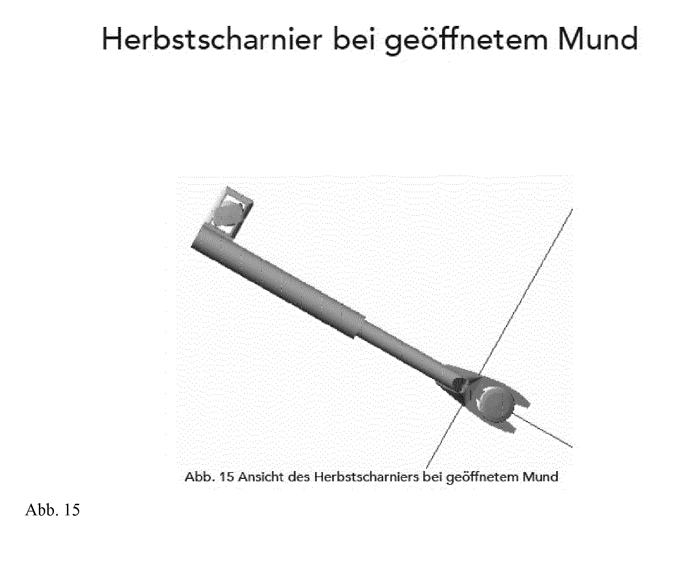

Das Einsetzen des Unterkieferattachments auf den Bolzen erfolgt durch Einrasten der Attachmentgabeln (Abb. 11-13).

### Vorteile des schraubenlosen Herbstscharnieres gegenüber dem traditionellen Herbstscharnier:

Die Aufbauhöhe des Bolzens, die sich aus der Höhe des Bolzens und der verwendeten Schraubenhöhe zusammensetzt, ist geringer.

Es zeigen sich weniger Schleimhautirritationen, außerdem erkennt man von außen nicht, ob man ein Herbstscharnier trägt.

Die Verwendung des schraubenlosen Herbstscharnieres kann nicht zu Verlusten der aktiven Elemente führen, da keine Schrauben verwendet werden.

Durch den Einsatz weniger Teile ist die Herstellung des schraubenlosen Herbstscharnieres einfacher und kostengünstiger. Das Einbringen der aktiven Elemente ist einfach. Der Tragekomfort für den Patienten ist angenehm und schleimhautfreundlich. Schließlich kann das Herbstscharnier durch den Patienten selbst kurzzeitig für die Mundhygiene entfernt werden, womit die mikrobielle Plaque besser entfernt werden kann.

## Patentansprüche

1. Der Patentanspruch bezieht sich auf die schraubenlose Fixierung der aktiven Elemente (Teleskoprohr und Stange) beim konventionellen Herbstscharnier durch die Verwendung zweier unterschiedlicher mechanischer Steckverbindungen.
